# EUROPÄISCHE PATENTSCHRIFT

(11) **EP 1 531 036 B1**
(45) Veröffentlichungstag und Bekanntmachung des Hinweises auf die Patenterteilung: **06.08.2008**
(21) Anmeldenummer: 04450209.4
(22) Anmeldetag: 10.11.2004
(51) Int. Cl.: B29C 63/04, B29C 63/16

(54) **Verfahren und Vorrichtung zum Einschlagen von flexiblen Materialien**
Method and apparatus for wrapping flexible materials
Procédé et dispositif pour envelopper des matériaux flexibles

(30) Priorität: 11.11.2003 AT 18162003
(43) Veröffentlichungstag der Anmeldung: 18.05.2005
(73) Patentinhaber: Hübner, Karl-Heinz, 1080 Wien (AT)
(72) Erfinder: Hübner, Karl-Heinz, 1080 Wien (AT)
(74) Vertreter: Wildhack, Helmut

(56) Entgegenhaltungen:
- EP-A- 0 676 477
- DE-U1- 9 407 177
- US-A- 4 016 025
- US-A- 5 139 604
- PATENT ABSTRACTS OF JAPAN Bd. 014, Nr. 046 (M-0926), 26. Januar 1990 (1990-01-26) & JP 01 275124 A (ISHIKAWAJIMA HARIMA HEAVY IND CO LTD), 2. November 1989 (1989-11-02)
- PATENT ABSTRACTS OF JAPAN Bd. 015, Nr. 109 (M-1093), 15. März 1991 (1991-03-15) -& JP 03 005125 A (ISHIKAWAJIMA HARIMA HEAVY IND CO LTD), 10. Januar 1991 (1991-01-10)
- PATENT ABSTRACTS OF JAPAN Bd. 1997, Nr. 08, 29. August 1997 (1997-08-29) -& JP 09 109266 A (INOAC CORP), 28. April 1997 (1997-04-28)
- PATENT ABSTRACTS OF JAPAN Bd. 015, Nr. 146 (M-1102), 12. April 1991 (1991-04-12) -& JP 03 024937 A (ISHIKAWAJIMA HARIMA HEAVY IND CO LTD), 1. Februar 1991 (1991-02-01)
- PATENT ABSTRACTS OF JAPAN Bd. 1998, Nr. 11, 30. September 1998 (1998-09-30) -& JP 10 156945 A (INOAC CORP), 16. Juni 1998 (1998-06-16)

## Beschreibung

Die Erfindung bezieht sich auf ein Verfahren und eine Einrichtung bzw. Werkzeug zur Durchführung dieses Verfahrens zum Einschlagen von flexiblen Materialien über ein Werkstück gemäß dem Oberbegriff des Anspruches 1 bzw. des Anspruches 6.

Unter der Bezeichnung Werkstück werden Teile aus beliebigen unterschiedlichen Materialien, so z.B. Kunststoff, Metall, Papier, Pressmassen usw. verstanden, die mit flexiblen Materialien oberflächenbeschichtet bzw. überzogen werden sollen.

Durch die EP 0 676 477 A wurden ein Verfahren und eine Einrichtung bekannt, beidenen ein Zuschnitt auf eine Einlegeform gelegt wird und auf diesen Zuschnitt ein Werkstück, dessen Umfangskontur im wesentlichen jener der Einlegeform entspricht, wobei der Zuschnitt zumindest über Teilbereiche über diese Kontur vorragt. Dabei ist die Einlegeform in einer Ausnehmung einer federnd an einem Gehäuse abgestützten Platte senkrecht zu dieser bewegbar.

Um die Ränder des Zuschnitts über die Ränder des Werkstückes zu schlagen wird die Einlegeform mittels Unterdrucks in die Ausnehmung hineingezogen, wodurch die überstehenden Ränder des Zuschnittes an den Wänden der Ausnehmung aufgestellt werden. Anschließend werden die überstehenden Ränder des Zuschnitts mit dem Druckelement, an dem ein Umlenkrahmen befestigt ist, dessen lichte Maße im Wesentlichen jener der Ausnehmung zur Aufnahme der Einlegeform entsprechen und der mit konkaven Ausrundungen versehen ist, die zum Umlenken der aufragenden Ränder des Zuschnitts dienen, nach innen umgeschlagen, wobei das Druckelement senkrecht gegen die Platte bewegt wird, in der die Einlegeform gehalten ist. Dabei erfolgt das Umschlagen in einem Schritt.

Dabei drückt der Umlenkrahmen die Platte nach unten, wobei es zu einer gegenseitigen Verschiebung der Platte und der Einlegeform kommt, sodass das im wesentlichen ebene Druckelement die umgeschlagenen Ränder des Zuschnitts gegen das Werkstück pressen kann.

Die Verbindung der umgeschlagenen Ränder des Zuschnitts mit den Werkstücken, bei denen es sich um beliebige, meist flächige, Formteile handelt, wie z.B. Schuhteile, Koffergriffe, Buch- oder Kalenderdecken od. dgl., erfolgt durch Verkleben oder Verschweißen.

A- Aus der US-A-5139604 ist eine Einrichtung der eingangs genannten Art bekannt. Dabei erfolgt das Abbiegen der bestehenden Ränder des Zuschnittes und das Verpressen dieser Ränder mit Hilfe eines Schlauches.
Aus der US-A-4016025 ist der Einsatz von Schläuchen oder flexiblen Kunststoffstücken zum Umbiegen von Flexiblen Materialien bekannt geworden. - A

Der Nachteil diese bekannten Verfahren und der bekannten Einrichtungen liegt darin, dass es, insbesondere bei etwas steiferen, aber auch extrem weichen, Zuschnitten zu Fehlern beim Einschlagen der überstehenden Ränder des Zuschnitts kommen kann, wodurch die Materialvielfalt eingeschränkt wird bzw. sich eine entsprechend hohe.

Ausschussrate ergibt. Außerdem ergeben sich durch das Niederpressen der umgeschlagenen Ränder aufgrund der unvermeidlichen Faltenbildung erhebliche Probleme.

.Ziel der Erfindung ist es, diese Nachteile zu vermeiden und ein Verfahren der eingangs erwähnten Art vorzuschlagen, bei dem ein weitgehend exaktes Umschlagen der überstehenden Ränder des Zuschnitts sichergestellt ist und zwar auch bei dreidimensionalen Werkstücken.

Erfindungsgemäß wird dies bei einem Verfahren gemäß dem Oberbegriff des Anspruches 1 durch die kennzeichnenden Merkmale des Anspruches 1 erreicht.

Durch die vorgeschlagenen Maßnahmen wird erreicht, dass die überstehenden Ränder des Zuschnitts in einfacher Weise in eine Lage gebracht werden, in der sie gut erfasst und leicht durch eine im Wesentlichen senkrecht zur Einlageform wirkende Kraft exakt auf das Werkstück umgeschlagen werden können. Dadurch werden Fehler beim Umschlagen der Ränder des Zuschnitts praktisch ausgeschlossen, sogar dann, wenn das Material des Zuschnitts extrem weich ist oder eine beträchtliche Steifigkeit aufweist.

Sofern die überstehenden Ränder in dem zweiten Schritt mit der Kraft in eine Lage gebracht werden, in der sie einen Winkel von 20° bis 90°, vorzugsweise 30° bis 70°, mit einer Senkrechten zum Werkstück bzw. zur Pressrichtung bzw. zur Ebene der Einlegeform einschließen,

ist sichergestellt, dass die gegen das Zentrum der Einlageform geneigten überstehenden Ränder des Zuschnitts leicht mit einem senkrecht zur Einlageform bewegbaren Werkzeug bzw. dem Anpress-Formrahmen erfasst und fertig umgeschlagen bzw. verbunden werden können.

Erfindungsgemäß kann auf einfache Weise eine ausreichende Kraft zum Umbiegen bzw. Schrägstellen der überstehenden Ränder aufgebracht werden, wobei keine besonderen Anforderungen an einen entsprechenden Aufbau einer Einrichtung gestellt werden müssen.

Es wird möglich, auch bei größeren konvex und/oder konkaven und/oder hinterschnitten geformten Werkstücken die überstehenden Ränder eines sehr weichen oder gegebenenfalls steifen Zuschnittes mit geringem Aufwand sicher umzuschlagen.

Bei konvex oder konkav geformten Werkstücken mit steilen Innenwänden ist es vorteilhaft, die Merkmale des Anspruches 3 vorzusehen. Dadurch ist ein besonders einfaches und exaktes Umschlagen der überstehenden Ränder des Zuschnitts möglich.

Um eine sichere Verbindung der umgeschlagenen Ränder des Zuschnitts mit einem Werkstück aus einem thermoplastischen Material sicherzustellen ist es vorteilhaft, die Merkmale des Anspruches 4 vorzusehen. Das Material des Werkstückes wird dazu ausreichend erwärmt, um mit dem Material des Zuschnittes verklebt bzw. verschweißt zu werden bzw. um eine Haftverbindung einzugehen.

Ein weiteres Ziel der Erfindung ist es, eine Einrichtung bzw. ein Werkzeug zur Durchführung des erfindungsgemäßen Verfahrens vorzuschlagen.

Ausgehend von einer Einrichtung bzw. einem Werkzeug gemäß dem Oberbegriff des Anspruches 6 werden daher die kennzeichnenden Merkmale des Anspruches 6 vorgeschlagen.

Durch die vorgeschlagenen Maßnahmen wird es auf einfache Weise ermöglicht, auf die überstehenden Ränder des Zuschnitts eine in das Innere der Ausnehmung der Platte bzw. des Werkstückes gerichtete Kraft auszuüben und die überstehenden Ränder gegen das Werkstück hin bzw. in die gewünschte Umbugrichtung zu biegen und anschließend die eingebogenen Ränder bzw. Randbereiche mit dem Anpressteil bzw. Formrahmen weiter umzuschlagen und gegen das Werkstück zu pressen. Auf diese Weise ergibt sich eine in konstruktiver Hinsicht sehr einfache Lösung, mit der es auf einfache Weise möglich, ist die überstehenden Ränder des Zuschnitts sehr exakt umzuschlagen. Prinzipiell kann die Kraftaufbringung über Teilbereiche oder über den gesamten Umfang der Einlegeform erfolgen. Auch ist es möglich, über Teilbereiche unterschiedliche Formen der Kraftaufbringung vorzusehen.

Diese Lösung eignet sich für Werkstücke nahezu aller Größen und Formen bzw. auch für weniger steife Zuschnitte und zeichnet sich durch einen nur geringen konstruktiven Aufwand aus. Durch diese Maßnahmen können, insbesondere bei größeren bzw. komplex geformten Werkstücken, die überstehenden Ränder der Zuschnitte mit geringem Aufwand umgeschlagen werden.

Für die Bearbeitung von Werkstücken aus einem thermoplastischen Material ist es vorteilhaft, die Merkmale des Anspruches 8 vorzusehen, wodurch die Randbereiche des Zuschnittes mit dem Werkstück durch Anschmelzen des Werkstückes und Anpressen der Randbereiche verbunden werden können. Dabei erfolgt die Wärmezufuhr vorteilhafter Weise vom Anpress-Formrahmen her, der mit dem Druckelement in einer gut wärmeleitenden Verbindung steht oder selbst beheizt wird, durch den umgebogenen Rand des Zuschnittes zum Werkstück.

Durch die Merkmale des Anspruches 9 ergibt sich der Vorteil, dass das Werkstück und der diesem zugeordnete Zuschnitt vor dem Umbiegen bzw. Schrägstellen der überstehenden Ränder des Zuschnitts sicher gehalten wird und es zu keinem gegenseitigen Verrutschen der Teile kommt.

Insbesondere bei innen konkav geformten Werkstücken mit steilen Innenwänden wird ein besonders exaktes Umschlagen des Zuschnitts ermöglicht. Bei Werkstücken mit Schaumstoffauflage kann diese mit der Festhalteeinrichtung auch komprimiert werden, wodurch sich nach dem Umbug eine oftmals gewünschte Außenmaterial-Spannung ergibt.

Prinzipiell ist es auch möglich, andere Vorgangsweisen zur Aufbringung der Umbiegekraft auf den überstehenden Abschnitt des Zuschnittes zu wählen.

Die Erfindung wird nun anhand der Zeichnung näher erläutert. Dabei zeigen:
Fig. 1 bis 4 eine erfindungsgemäße Einrichtung bzw. ein Werkzeug in verschiedenen Phasen der Durchführung des erfindungsgemäßen Verfahrens,
Fig. 5 bis 7 eine Variante der Einrichtung bzw. der Werkzeuge nach den Fig. 1 bis 4 in verschiedenen Phasen der Durchführung des erfindungsgemäßen Verfahrens, und
Fig. 8 und 8a bis 11 eine weitere Ausführungsform einer erfindungsgemäßen Einrichtung bzw. ein weiteres Werkzeug in verschiedenen Phasen der Durchführung des erfindungsgemäßen Verfahrens.

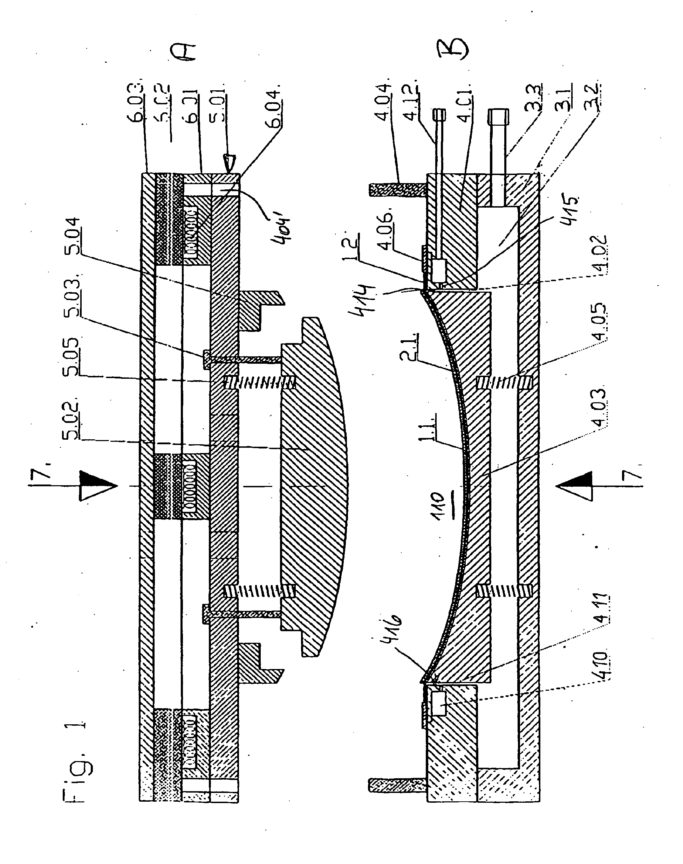

Das Werkzeug nach den Fig. 1 bis 4 weist einen Oberteil bzw. einen Formteil A und einen Unterteil bzw. Gegenformteil B auf. Der Oberteil A und der Unterteil B werden im Betrieb im zeitlich gesteuerten Bewegungsablauf von einer nicht dargestellten Presseinheit in Richtung der Pfeile 7 aufeinander zu bewegt bzw. voneinander entfernt. Dazu werden der Oberteil und der Unterteil zwischen die Pressstempel eingelegt und die Pressstempel entsprechend betätigt. Dabei weist der Oberteil eine Heiz-Grundplatte 603 auf, an deren Innen- bzw. Unterseite eine Isolierplatte 602 angeordnet ist, an deren Innen- bzw. Unterseite zumindest eine Heizplatte oder Heizeinheit 601 gehalten ist. Die Heiz-Grundplatte 603 könnte auch direkt mit Heizpatronen beheizt werden.

Diese Heizplatte 601 heizt eine Druckplatte 501 auf, an deren Unterseite ein, gegebenenfalls mit Heizelementen, versehener Anpress-Formrahmen 504 befestigt bzw. fest angeordnet ist. Dabei entspricht die Umfangskontur des Anpress-Rahmens 504 jener des Werkstücks 11, das auf einem Zuschnitt 11 liegt, wobei der Zuschnitt 11 auf dem Unterteil liegt.

Weiters ist an dem Druckelement 501 ein Festhalte-Formteil 502 über Federn 505 abgestützt, wobei der Festhalte-Formteil 502 mittels Führungsstiften 503 geführt ist. Die Form bzw. Kontur dieses Festhalte-Formteils 502 entspricht der Form bzw. Kontur des Werkstückes 21.

Der Unterteil des Werkzeuges weist eine Form-Platte 401 auf, in der eine Ausnehmung 414 ausgebildet ist, deren Umfangskontur im wesentlichen jener des Werkstückes 21 entspricht. In dieser Ausnehmung 414 ist eine Einlegeform 403 verschiebbar gehalten, wobei ein umlaufender Spalt 402 verbleibt.

Diese Einlegeform 403 ist über Federn 405 an einer Grundplatte 31 abgestützt, wobei unter der Einlegeform 403 ein als Vakuumkasten ausgebildeter Hohlraum 32 vorhanden ist, der über eine Leitung 33 mit einer nicht dargestellten Unterdruckquelle verbunden ist.

In der Platte 401 ist eine die Ausnehmung 414 zumindest teilweise umgebende bzw. ringförmige Luftkammer 410 angeordnet, die über eine Anschlussleitung 412 mit einer Druckluftquelle verbunden ist. Dabei sind an die Luftkammer 410 Ausblasdüsen 415 angeschlossen, die gegen das Innere der Einlegeform 403 bzw. auf das Werkstück 21 bzw. in bestimmten Arbeitsschritten auf die Randbereiche (12) des Zuschnittes (11) gerichtet sind. Die Strömungsrichtung der ausgeströmten Luft steht senkrecht zum Umfang der Ausnehmung 414 bzw. kann auch dazu geneigt, z.B. mit einem Winkel von 90° bis 45°, verlaufen.

Auf der Platte 401 ist ein Anlegerahmen 406 angeordnet, der den lichten Raum zum Einlegen eines Zuschnittes 11 begrenzt.

In das Werkzeug bzw. in dessen Unterteil B innerhalb des Anlegerahmens 406 werden ein Verbund eines Werkstückes 21 mit einem Zuschnitt 11 oder ein Zuschnitt 11 und auf diesen, gegebenenfalls unter Einlage von Zwischenschichten, z.B. Wattierungen, ein Werkstück 21 eingelegt, auf das die überstehenden Ränder 12 des Zuschnittes 11 eingeschlagen und verklebt bzw. verschweißt werden sollen.

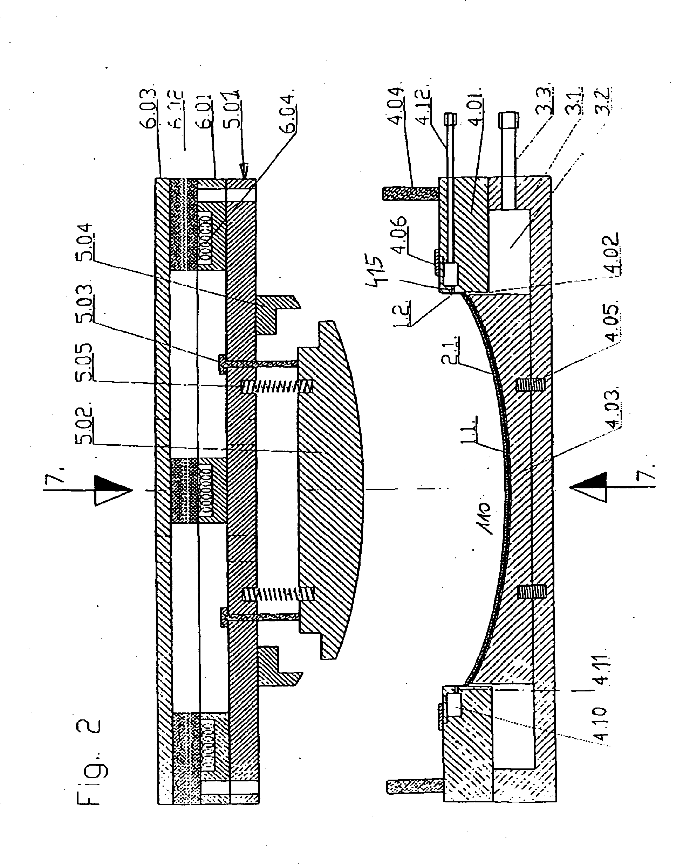

Nach dem Einlegen des Zuschnittes 11 und des Werkstückes 21 in die Einlegeform 403 wird der Hohlraum 32 mit der Vakuumquelle verbunden, wodurch die Einlegeform 403 in den Hohlraum 32 eingezogen wird. Dadurch legen sich die überstehenden Ränder 12 des Zuschnittes 11 an die Wände 416 der Ausnehmung 414 an, wobei durch das im Ringspalt 402 wirkende Vakuum sichergestellt ist, dass sich der überstehende Rand 12 dicht an die Wand 415 anlegt (Fig. 2). Dabei werden die Federn 405 zusammengepresst.

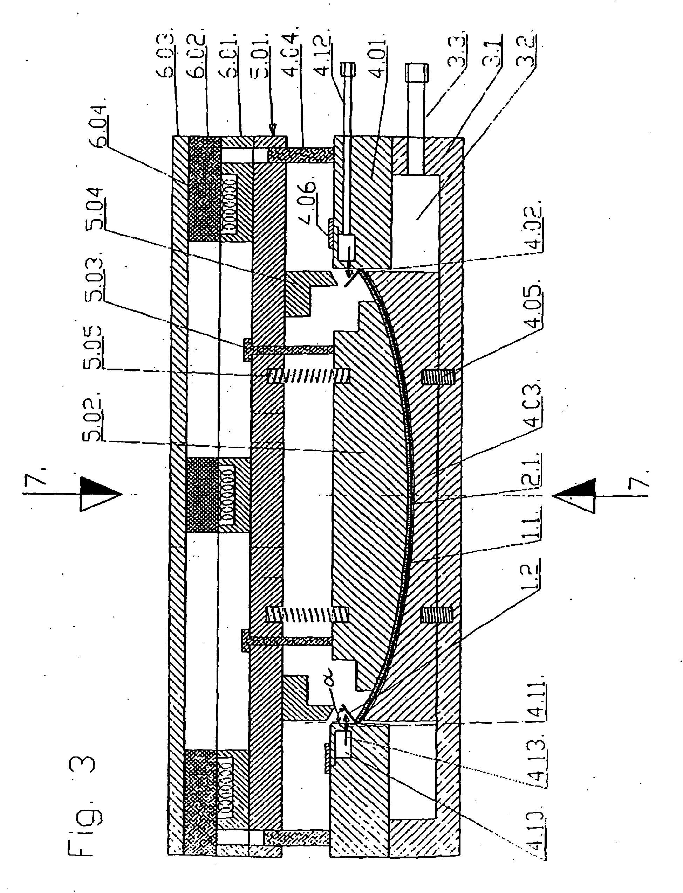

Anschließend wird die Grundplatte 501 abgesenkt, wodurch der auf Bolzen 503 geführte Festhalte-Formteil 502 an das Werkstück 21 gepresst wird und dieses daher festgehalten wird. Danach werden die Ausblasdüsen 415 über die Luftkammer 410 mit Druckluft, die gegebenenfalls beheizt sein kann, beaufschlagt, wodurch die aufragenden Ränder 12 in die gewünschte Umbugrichtung gedrängt und dadurch nach innen gebogen bzw. schräggestellt werden. (Fig. 3)

Anschließend wird die Grundplatte 501 weiter nach unten gedrückt, wobei die Federn 505 zusammengepresst werden. Dabei drückt der Anpress-Formrahmen 504 die nach innen gebogenen überstehenden Ränder 12 nach unten und schlägt diese vollständig um. In weiterer Folge werden die umgeschlagenen Ränder 12 gegen das Werkstück 11 gepresst.

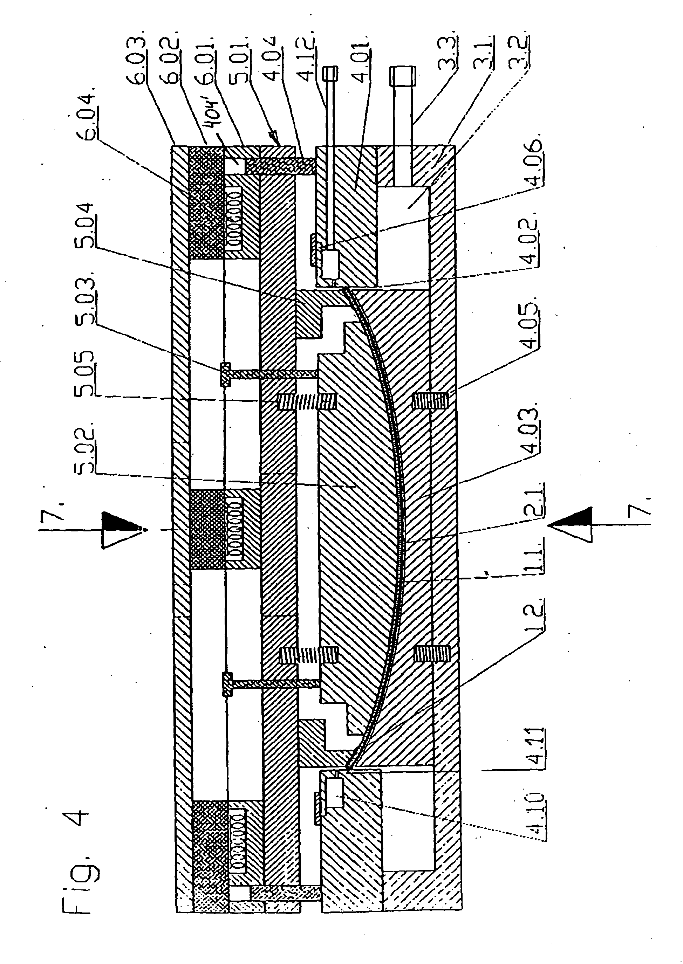

Da der Anpress-Formrahmen 504 in gut wärmeleitender Verbindung mit der beheizten Grundplatte 501 steht oder direkt beheizt ist und daher entsprechend erwärmt ist, kann durch die umgeschlagenen Ränder 12 des Zuschnittes 11 hindurch das thermoplastische Material des Werkstückes 21 angeschmolzen und durch den Druck oder mittels eines wärmeaktivierbaren Klebers der Rand 12 mit dem Zuschnitt 11 innig verbunden werden. (Fig. 4)

Grundsätzlich kann die Verbindung auch durch Verkleben mit einem Kleber, gegebenenfalls einem thermoaktivierbaren Kleber, erfolgen, der mit der Wärme des Anpress-Formrahmens 504 aktiviert wird. Auch durch Ultraschall oder Hochfrequenz bzw. Mikrowellen aktivierbare Kleber sind einsetzbar.

Zur Führung des Ober- und Unterteiles sind Führungsbolzen 404 und diese aufnehmende Bohrungen 404' vorgesehen.

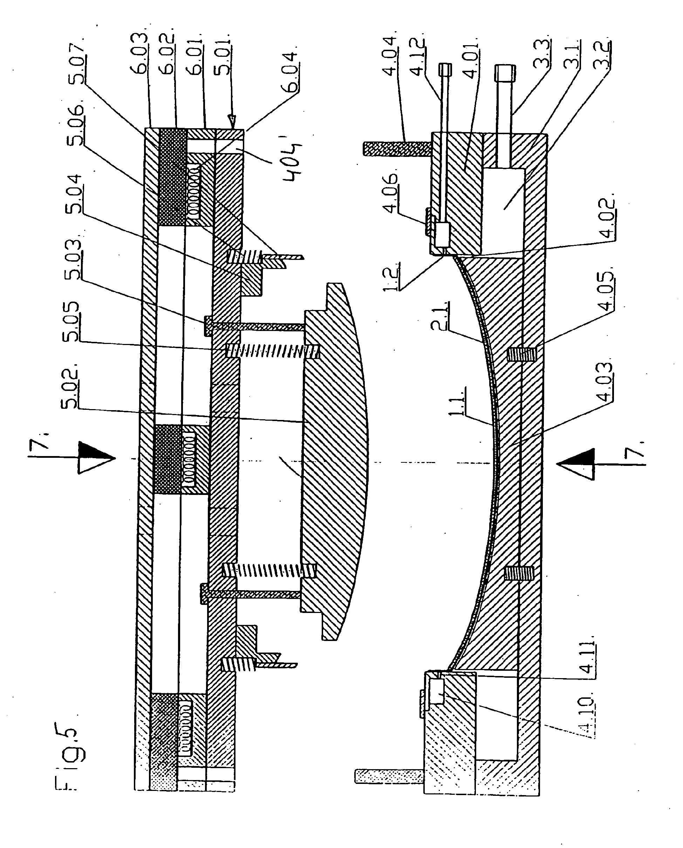

Die Einrichtung und die Vorgangsweise nach den Fig. 5 bis 7 unterscheidet sich von jenen nach den Fig. 1 bis 4 lediglich dadurch, dass der Anpress-Formrahmen 504 von einem Festhalterahmen 507 umgeben ist, der mit Federn 507 an der Grundplatte 501 abgestützt ist. (Fig. 5)

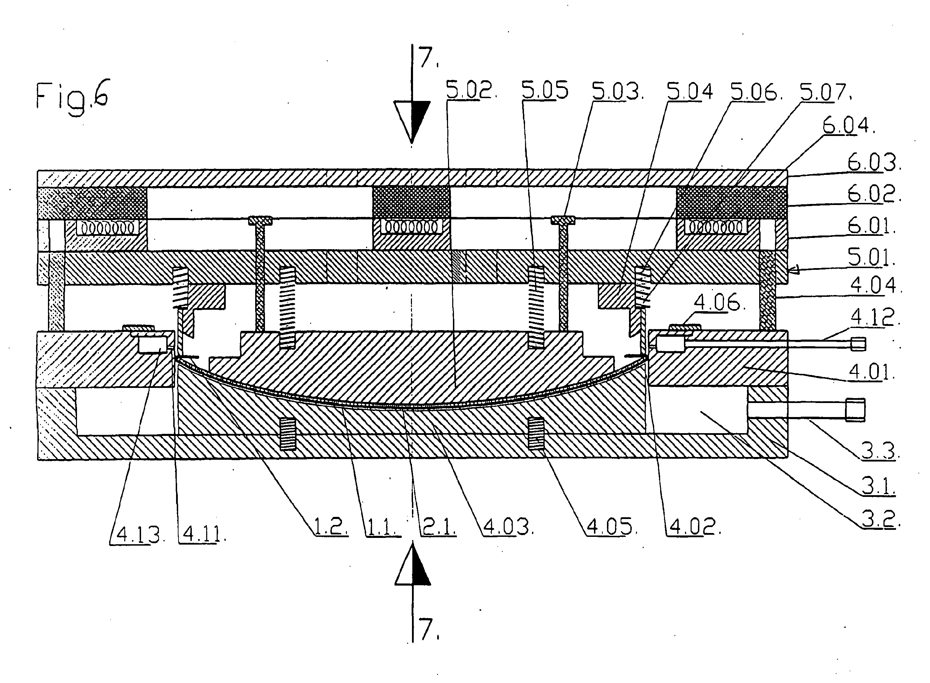

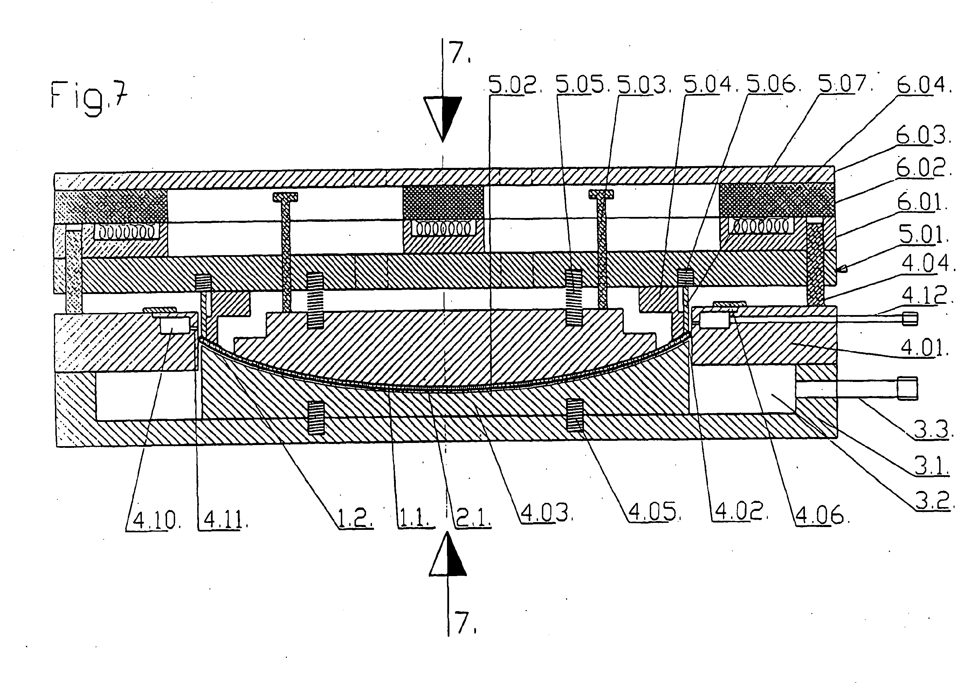

Dieser speziell für Werkstücke mit steil nach innen abfallenden Wandungen vorteilhafte Festhalterahmen 507 kommt beim Absenken der Grundplatte 501 gegen die Platte 401 zuerst in Kontakt mit den durch die Beaufschlagung der Ausblasdüsen 415 abgebogen bzw. in Umbugrichtung schräg gestellten Ränder 12 und hält diese in den Stirnrandbereichen des gegebenenfalls konkav geformten Werkstückes 21 fest (Fig. 6). In weiterer Folge werden die Ränder 12 mit dem Anpress-Formrahmen 504 weiter umgeschlagen und gegen das Werkstück 21 gepresst. Dabei werden die den Festhalterahmen 507 abstützenden Federn 506 weiter zusammengepresst. (Fig. 7)

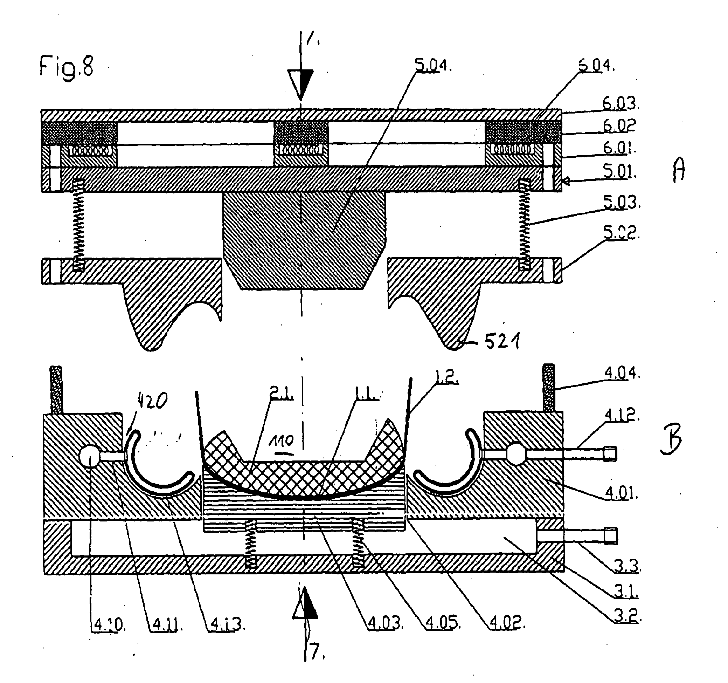

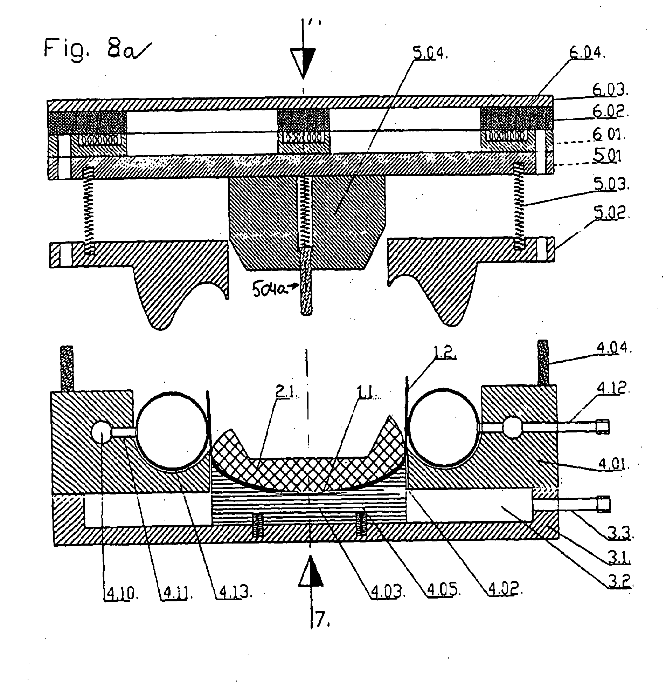

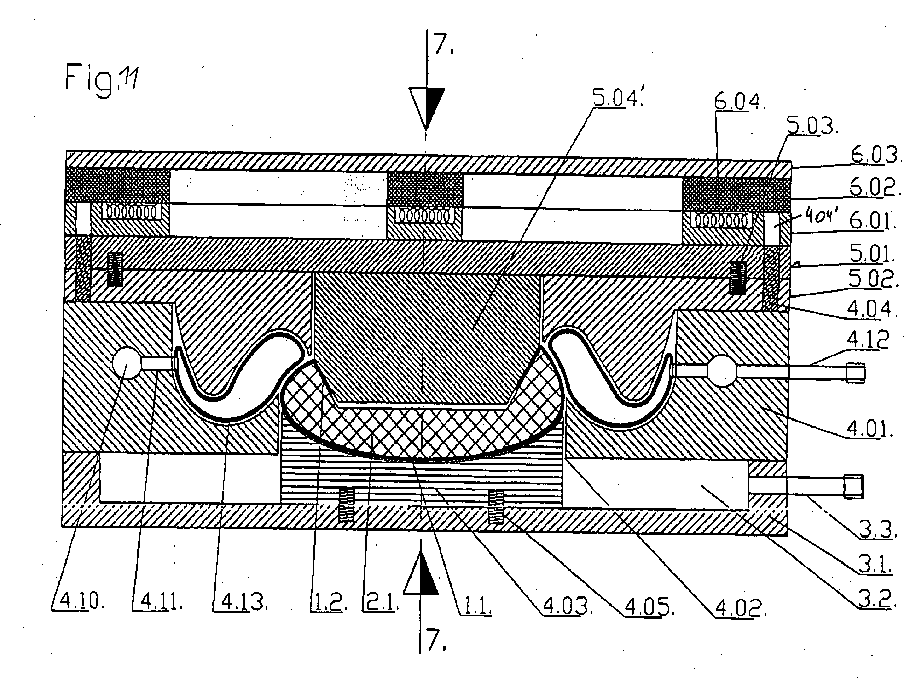

Bei der Ausführungsform nach den Fig. 8 bis 11 ist an der Grundplatte 501 über Federn 530 eine Quetschplatte 520 abgestützt, die mit zumindest einer Formrippe 521 versehen ist. Weiters ist an der Grundplatte 501 der Anpressteil 504 befestigt.

Die Platte 401 ist mit einer die Ausnehmung 414 zumindest teilweise umgebenden Ringnut 420 versehen, in der ein Schlauch 421 eingelegt ist, der über eine Leitung 411 mit einer ringförmige Luftkammer 410 verbunden ist, die über Verbindungsleitungen 412, mit Druckfluid, insbesondere Druckluft, versorgbar ist. Als Druckfluid können auch Wasser, Gase, Öl od. dgl. eingesetzt werden.

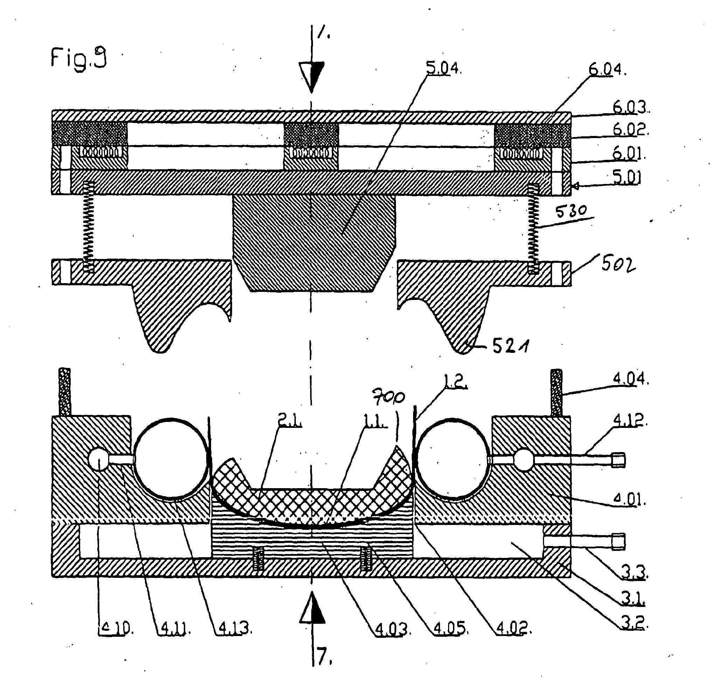

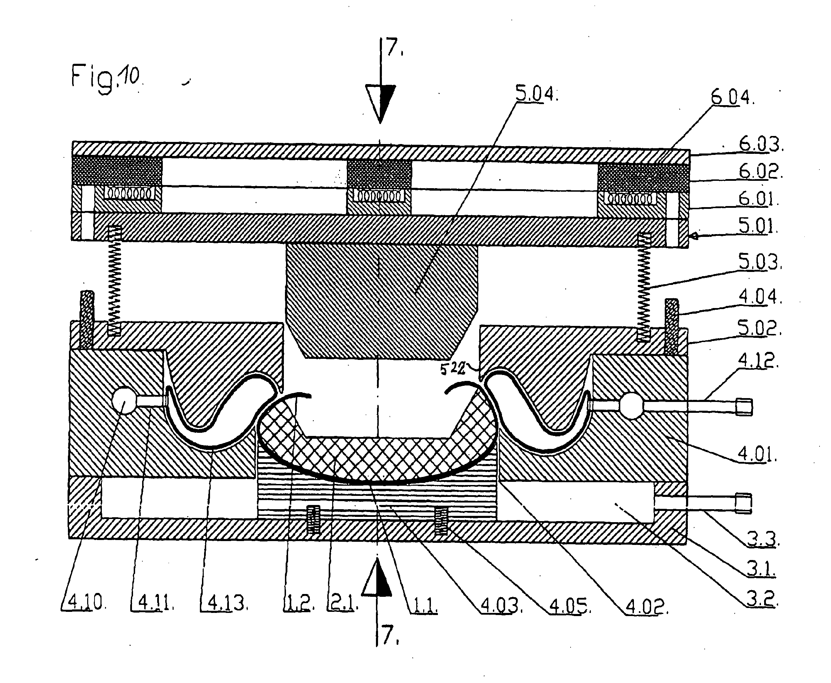

Nach dem Auflegen des Zuschnitts 11 und des Werkstücks 21 bzw. eines bereits vorliegenden Werkstück-Zuschnitt-Verbundes auf die Einlegeform 403 und dem Absenken der Einlegeform in den Vakuum-Hohlraum 32 begleitet von einem Senkrechtstellen der Ränder 12 (Fig. 9) wird der Schlauch 421 aufgeblasen oder ist bereits zuvor aufgeblasen worden. Anschließend werden die Grundplatte 501 und damit die Quetschplatte 520 abgesenkt. Dadurch wird der Schlauch 421 an seinem äußeren Rand bzw. Umfang mit den Formrippen 521 gequetscht und verformt, wodurch die Ränder 12 des Zuschnitts 11 schräggestellt werden (Fig. 10). Der Vorsprung 522 verhindert ein Eintreten des Schlauches 421 in den Pressraum.

Schließlich wird die Grundplatte 501 weiter abgesenkt, wodurch der Festhalteformteil bzw. Anpressteil 504 die Ränder 12 weiter umbiegt und gegen das Werkstück 21 presst.

Die Heizplatte 601 kann durchgehend oder teilweise durchgehend beheizt ausgebildet sein; auch der Anpressteil 504 kann beheizt sein. Die beheizte Platte 601 hat den Vorteil, dass man den Anpressteil 504 austauschen kann und trotzdem eine Wärmeübertragung stattfinden kann.

Die geneigten Flächen des Anpressteiles 504 sind an die (Innen)Konturen des Werkstückes angepasst. Über zumindest einen Teilbereich des Umfanges der Einlegeform erstrecken sich Luftdüsen 4 oder Schläuche 413 oder Schaumstoffprofile. Der Festhalterahmen 507, der den Randbereich abstützt, kann bei jeder Ausführungsform über zumindest Teilbereiche des Umfangs vorgesehen sein. Es ist ohne weiteres möglich, für unterschiedliche Bereiche des zu verpressenden Werkstückes 21 unterschiedliche Umbugmechanismen vorzusehen bzw. die den Rand 12 des Zuschnittes 11 schrägstellenden Einrichtungen in engeren oder weiteren Abständen oder durchgehend vorzusehen.

Der bei der Ausführungsform gemäß Fig. 8 bis 11 vorgesehene innenliegende Anpressteil 504 kann in Form eines Ringes ausgebildet bzw. innen ausgenommen sein. Bei dieser Ausführungsform kann auch ein federbelasteter Niederhalter 504' für den Einlegeteil bzw. das Werkstück 21 vorgesehen sein, wie in Fig. 8a dargestellt.

Das Verkleben des Zuschnittes mit der Innenfläche des Werkstückes 21 erfolgt vorteilhaft dadurch, dass durch das Material des Zuschnittes 12 hindurch Wärme auf den Einlageteil ausgeübt wird, und zwar mit dem Anpressteil 504 derart, dass durch den Rand 12 hindurch eine Erweichung des Kunststoffmaterials des Werkstückes 21 erfolgt und damit das Außenmaterial und der Einlegeteil miteinander verklebt werden. Voraussetzung dafür ist, dass der Einlegeteil 21 aus entsprechend erweichbaren thermoplastischen bzw. plastifizierbaren Kunststoff besteht, der entsprechende Klebewirkung allenfalls bei Temperaturen von 160 bis 240°, insbesondere 190 bis 240°, entfaltet. Diese Temperaturen müssen oberhalb des Erweichungspunktes, gegebenenfalls oberhalb des Schmelzpunktes, des Kunststoffmaterials liegen, dürfen jedoch nur in den innenliegenden Randbereichen des Werkstückes 21 erreicht werden. Dafür können entsprechende Heizpatronen im Anpressteil 504 vorgesehen sein.

Andernfalls könnte auch vorgesehen sein, dass an dem Außenmaterial ein Auftrag von einem thermoaktivierbaren Kleber vorgesehen ist, der bei etwa 60 bis 90° aktivierbar ist.

Prinzipiell könnte auch das Außenmaterial vor dem Aufbringen auf den Einlegeteil mit einem üblichen (Druck)Kleber versehen werden, der allein durch den Anpressdruck, gegebenenfalls bei erhöhter Temperatur, verklebt.

Es ist vorgesehen, dass das Beaufschlagen mit Druckfluid eine Verstellung bzw. eine Schrägstellung des Überstandes des Außenmaterials bzw. Zuschnittes 12 in einem Winkel α von 30 bis 60° zur Senkrechten bewirkt (Fig. 3).

Eine durchgehende Heizplatte 601 besitzt den Vorteil, dass man verschieden große Werkzeuge unterhalb der Heizplatte bzw. an dieser befestigen kann. Bei extremen Formen ist selbstverständlich auch eine direkte Beheizung des Anpressrahmens 504 möglich.

Der Düsenabstand wird zwischen 5 und 20 mm gewählt, die Druckluft hat etwa 4 bis 10 bar; der Düsendurchmesser kann 0,5 bis 2 mm betragen.

Der Anpressrahmen 504 besitzt Flächen die zum Solleinschlagrand an dem Werkstück 21 parallel verlaufen.

Der Festhalterahmen 507 kann eine durchgehende Anpressfläche oder eine unterbrochene Anpressfläche haben; letztlich übt in Anlagestellung des Anpressteiles 504 am Werkstück 21 bzw. an dem Außenmaterial 12 der Teil 507 zwar auch eine gewisse Druckwirkung aus, diese ist jedoch üblicherweise nicht stärker als die des Anpressteiles 504. Der Festhalterahmen 507 hat vor allem die Funktion, den erhaltenen Umbug, insbesondere bei relativ steifen Material vorab weiter umzubiegen und im Randbereich des Werkstückes 21 fixiert zu halten, bis der Anpressrahmen 504 abgesenkt wurde und die Anpress- und Verklebewirkung eintritt. Insbesondere wenn steile Innenwände zu verkleben sind, bewährt sich ein zusätzlicher Festhalterahmen 507 zum Festhalten des Umbuges.

Durch den Spalt 402 wird Vakuum bzw. Unterdruck auf das Außenmaterial 12 ausgeübt und damit eine gute Anlage des Außenmaterials bzw. Umbuges 12 an die Innenfläche 416 erreicht, womit das Material im wesentlichen senkrecht zur Ebene der Platte 401 aufgestellt und für die Beaufschlagung durch die Düsen vorbereitet wird.

Der Schlauch 413 kann in Anfangstellung zusammengefallen sein und erst später aufgeblasen werden (Fig. 8); auch der Einsatz von immer aufgeblasenen bzw. luftgefüllten Schläuchen bzw. von Schaumstoffprofilen ist möglich. Der Schlauch 413 bzw. das Schaumstoffprofil kann über einen gewissen Teil seines Umfanges am Bauteil 401 angeklebt bzw. anvulkanisiert sein; es kommen üblicherweise Fahrradschläuche oder ähnlich aufgebaute Schläuche zum Einsatz, die hochelastisch sind und lange Lebensdauer aufweisen. Der Schlauch 413 bzw. das Profil kann eine vorgegebene variable Querschnittsform bzw. eine bevorzugte Ausdehnungsrichtung besitzen. Der Schlauch 413 bzw. das Profil könnte über gewisse Oberflächenabschnitte durch Aufbringungen oder Materialverstärkungen eine verringerte Dehnungsfähigkeit haben um unterschiedliche Wirkung auszuüben.

Bei der Schlauchversion ist es vorteilhaft, wenn das Werkstück 21 mit einem Niederhalter niedergehalten wird, um Lageveränderungen zu vermeiden; diese Version ist vor allem von Vorteil für Bauteile, die Hinterschneidungen bzw. nach innen gerichtete Flächen aufweisen.

Der Anpressteil 504 könnte außen mit einer Reibschicht, z.B. aus Silikon, Gummi, versehen sein, um das Außenmaterial 12 entsprechend gut über die Kante nach oben weisenden Kante 700 des Werkstückes 21 nach innen zu spannen bzw. nach innen zu ziehen.

Das erfindungsgemäße Werkzeug wird dadurch betätigt, dass es mit eingelegtem Werkstück, das mit dem Außenmaterial versehen ist, in eine Presse eingelegt wird und durch die Annäherung von Press-Werkzeug A und Press-Gegenwerkzeug B die entsprechende Verpressung und Verklebung erfolgt.

Wie aus der vorangehenden Beschreibung zu entnehmen ist, erfolgt das Umbiegen der Randbereiche 12 des Zuschnittes 11 in drei Schritten, wobei der zweite Schritt des Schrägstellens durch Beaufschlagung der Randbereiche 12 mittels eines Druckmediums, insbesondere Luft, oder durch Beaufschlagung mittels eines Schlauches 413 erfolgen kann. Prinzipiell könnte die Schrägstellung auch mit Greifern oder ähnlichen Elementen erfolgen und wird mit dem Festhalterahmen 507 unterstützt.

Das Werkstück 21 und der Zuschnitt 11 können entweder einzeln in die Pressform eingelegt werden oder als bereits angefertigter Verbundteil. Zwischen dem Zuschnitt 11 und dem Werkstück 21 können Schaumstofflagen, Abstandgewirke bzw. Vliese eingelegt werden, die im Zuge des Verklebens bzw. Verbindens des Zuschnittes 11 mit dem Werkstück 21 mitgebunden werden.

Die Werkstücke sind vorwiegend aus ABS, PP oder Pressmasse aus Bastfasern oder anderen Naturprodukten hergestellt, insbesondere durch Spritzen, Hinterspritzen, Tiefziehen oder Formpressen.

Die Verbindung zwischen den überstehenden Rändern 12 des Werkstückes 21 und dem Werkstück 21 kann durch thermoaktivierbaren Klebstoff, durch Anschmelzen bei thermoplastischen Werkstoff der Werkstücke 21 (ABS, PP, PVC) durch Zuhilfenahme von Ultraschall oder Hochfrequenz- bzw. Mikrowellen (bei entsprechender Ausgestaltung des Anpressrahmens bzw. des Formteils) durch entsprechende Beheizung des Anpressteils bzw. des Rahmens erfolgen.

Es besteht des weiteren die Möglichkeit, dass Kühleinheiten vorgesehen sind, mit denen die erhitzten Bereiche des Werkstückes wieder zurückgekühlt werden können. Derartige Kühlbereiche können insbesondere in der Platte 401, in der im Formteil 403, allenfalls auch in der Platte 501 bzw. in den Bauteilen 603, 502, 520, 521 und 522, ausgebildet sein. Der Pressteil 504 ist vorteilhafterweise immer heiß.

Werkstücke, die vorteilhafter Weise mit dem erfindungsgemäßen Verfahren hergestellt werden können, sind insbesondere Teile von Fahrzeugen, insbesondere für die Fahrzeuginnenausstattung, wie z.B. Türspiegel, Armauflagen, Fenster- und Türholmauskleidungen (ABC-Säulen), Instrumententafeln- und Mittelkonsolenteile, Sonnenblenden, Leuchtenabdeckungen usw. In vergleichbarer Weise können jedoch auch Kalender, Schreibunterlagen, Brieftaschen, Mappen, Schubteile usw. gefertigt werden.

Es wird bemerkt, dass die Form 403 keinesfalls eine sich lediglich in einer Ebene erstreckende Auflage für des Werkstück 21 besitzen muss. Die Auflagefläche kann ohne weiteres dreidimensional ausgeführt sein bzw. unterschiedliche Höhenbereiche aufweisen; gleiches gilt für das Presswerkzeug 504.

Ganz allgemein ist zu bemerken, dass anstelle oder zusätzlich von Ausblasdüsen 415 auch Ausblasschlitze (nicht dargestellt) vorgesehen sein können, welche Schlitze sich zumindest längs eines Teilbereiches des Umfanges der Einlegeform 403 erstrecken können. Luftschlitze haben den Vorteil, dass sie eine über ihre Erstreckung kontinuierliche Luftströmung in Richtung des Inneren der Einlegeform 403 ausbilden.

Es wird des weiteren bemerkt, dass bei Ausnehmungen bzw. Durchbrechungen aufweisenden Werkstücken entsprechende Einrichtungen zur Aufbringung einer Kraft auf die Randbereiche 12 von Zuschnitten 11 innerhalb dieser Ausnehmung vorgesehen sein können. Auch derartige Einrichtungen erzeugen eine Kraft, die in die Ausnehmung der Einlegeform 403 gerichtet ist, von der das Werkstück 21 und der Zuschnitt 11 aufgenommen sind. Bei dem Umbiegen bzw. Schrägstellen der Ränder eines Zuschnittes 11 für ein kreisringförmig gestaltetes Werkstück, z.B. ein Lenkrad, können somit sowohl längs des Außenumfanges als auch längs des Innenumfanges der Ausnehmung 414 der Einlegeform 403 Einrichtungen zur Kraftaufbringung, d.h. Luftdüsen, Luftspalte, Schläuche bzw. Quetschbauteile, Greifer oder ähnliche Einrichtungen angeordnet sein, welche die Ränder 12 der Zuschnitte 11 in die gewünschte Biegerichtung bzw. Schrägstellung verstellen. In diesem Fall sind sowohl die von außen als auch die von innen aufgebrachten Kräfte in das Innere der Ausnehmung 414 der Einlegeform 403 gerichtet.

Anstelle eines oder zusätzlich zu einem Schlauch(es) 413, so wie er beispielsweise in Fig. 9, 10 und 11 dargestellt ist, könnte auch ein flexibles bzw. bei einem Quetschen ausreichend flexibel bzw. rückstellend verformbarer Schaumstoffbauteil eingesetzt werden, der aus einem weichen, elastisch verformbaren Schaumstoff, insbesondere Polyurethan-Schaum, bestehen kann. Der Querschnitt dieses Schaumstoffprofils kann beliebig gewählt bzw. an den gewünschten Verwendungszweck angepasst werden; insbesondere könnte ein derartiges Schaumstoffprofil einen kreisförmigen Querschnitt aufweisen, so wie ein ebenfalls einsetzbarer Gummischlauch. Wesentlich ist, dass das Schaumstoffprofil nach einer Belastung mit den Quetschrippen wieder in seine Ausgangsform und -stellung zurückkehrt bzw. bei Belastung in die gewünschte Richtung ausweicht.

## Patentansprüche

1. Verfahren zum Einschlagen oder Umbugen von flexiblen Materialien über ein dreidimensionale Erstreckung aufweisendes Werkstück (21), bei dem das Werkstück (21) auf zumindest einen um dieses Werkstück (21) umzuschlagenden Zuschnitt (11), dessen Größe jene des Werkstückes (21) übersteigt, gelegt und der Zuschnitt (11) samt dem Werkstück (21) in eine Vertiefung (414) einer Einlegeform (403) eingebracht oder gezogen wird, deren Begrenzung dem Umfang des Werkstückes (21) im Wesentlichen entspricht oder diesen geringfügig übersteigt und bei dem die überstehenden Ränder (12) des Zuschnittes (11) umgebogen und mit einer vorzugsweise senkrecht zur Oberfläche der Vertiefung (414) und/oder des Werkstückes (21) wirkenden Kraft an dieses gepresst oder mit diesem verbunden werden,
wobei in einem ersten Schritt das Werkstück (21) mit dem Zuschnitt (11) in die Vertiefung (414) eingesaugt oder durch Unterdruck eingezogen wird, wobei die Ränder des Zuschnittes (11) senkrecht zur Ebene der Einlegeform (403) und deren Ränder überragend aufgestellt werden,
wobei in einem zweiten Schritt zum Umbiegen der überstehenden Ränder bzw. Randbereiche (12) nach dem Einsaugen in die Vertiefung bzw. Ausnehmung (414) die aufgestellten, überstehenden Ränder (12) des Zuschnittes (11) mit einer vom Rand der Vertiefung (414) in Richtung des von ihr umgrenzten Raumes (110) gerichteten, vorzugsweise einer parallel zur Einlegeform (403) wirkenden, Kraft um einen Winkelbetrag schräggestellt oder gebogen werden,
und wobei anschließend in einem dritten Schritt die Ränder der Randbereiche (12) des Zuschnittes (11) mit einer im Wesentlichen senkrecht zur Vertiefung (414) oder zum Werkstück (21) oder zur Ebene der Einlegeform (403) wirkenden Kraft weiter umgebogen und gegen das Werkstück (21) gepresst werden, **dadurch gekennzeichnet, dass** die zum Umbiegen ausgeübte Kraft durch zumindest über einen Teilbereich der Vertiefung (414) erfolgendes partielles Quetschen und Verformen eines flexiblen, Bauteiles, insbesondere eines mit Luft gefüllten oder aufblasbaren Schlauches (413) oder eines Schaumstoffprofils erzeugt wird, der bzw. das durch dieses Quetschen in einem von der Vertiefung (414) und vom Werkstück (21) abgekehrten Bereich gegen den Innenraum (110) der Vertiefung (414) bzw. auf das Werkstück (21) zu gedrängt wird und den Zuschnitt (11) samt dem Randbereich (12) des Zuschnittes (11) in Richtung auf das Werkstück hinbiegt bzw. oder schräg stellt.

2. Verfahren nach Anspruch 1, **dadurch gekennzeichnet, dass** die überstehenden Ränder (12) in dem zweiten Schritt mit der Kraft in eine Lage gebracht werden, in der sie einen Winkel (α) von 20° bis 90°, vorzugsweise 30° bis 70°, mit einer Senkrechten zum Werkstück (21) oder zur Pressrichtung oder zur Ebene der Einlegeform (403) einschließen.

3. Verfahren gemäß Anspruch 1 oder 2, insbesondere zum Einschlagen oder Umbiegen des Zuschnittes (11) bei innen konkav geformten Werkstücken, **dadurch gekennzeichnet, dass** der Zuschnitt (11) nach dem ersten Schritt an zumindest einem Teilbereich der stirnseitigen Randfläche des Werkstückes (21) oder längs zumindest eines Teilbereiches des Umfanges der Einlegeform (403) gehalten wird und gleichzeitig mit dem Halten der dritte Schritt des Umbiegens und Anpressens durch einen Anpressrahmen bzw. Formteil durchgeführt und dieses Halten bis zum Beginn, insbesondere bis zum Ende, des dritten Schrittes beibehalten wird.

4. Verfahren gemäß einem der Ansprüche 1 bis 3, **dadurch gekennzeichnet, dass** zum Verbinden der umgeschlagenen Ränder bzw. Randbereiche (12) mit dem Werkstück (21) die Randfläche des Werkstückes (21) durch die Randbereiche (12) hindurch angeschmolzen und das Werkstück (21) mit dem Rand (12) des Zuschnittes (11) verpresst verbunden, verklebt bzw. verschweißt wird.

5. Verfahren gemäß einem der Ansprüche 1 bis 4, **dadurch gekennzeichnet, dass** als flexible Materialien Leder, Kunstleder, Kunststoff oder Textilien eingesetzt werden, die mit aus Metall, Kunststoff, Papier, Pressmassen, bestehende Werkstücke (21) oder flächige Formteile oder Teile von Fahrzeuginnenausstattungen verbunden werden.

6. Einrichtung zur Durchführung des Verfahrens gemäß einem der Ansprüche 1 bis 5, mit einer Platte (401) mit einer Ausnehmung (414), in der eine Einlegeform (403), gegebenenfalls unter Einhaltung eines kleinen Ringspaltes (402) verschiebbar gehalten ist, die zur Aufnahme eines Zuschnittes (11) aus einem Außenmaterial und eines auf diesem aufliegenden oder damit verbundenen Werkstückes (21) vorgesehen ist, dessen Kontur im Wesentlichen jener der Einlegeform (403) entspricht oder aber etwas geringer ist, wobei das Werkzeug ein der Einlegeform (403) gegenüberliegendes Oberwerkzeug oder Druckelement (501) aufweist, wobei im Bereich oder an der Platte (401) des Werkzeugs oder im Bereich der dem Innenraum (110) der Ausnehmung (414) zur Aufnahme der Einlegeform (403) zugekehrten Wände (416) der Ausnehmung (414) zumindest eine vom Rand in den bzw. in Richtung des von der Einlegeform (403) definierten Raum (110) bzw. gegen das Zentrum der Ausnehmung (414) hin wirkende Kraft erstellende Einrichtung angeordnet ist, mit der der überstehende Rand oder Randabschnitt (12) des Zuschnittes (11) beaufschlagbar ist, und wobei an dem Oberwerkzeug oder Druckelement (501) ein Anpressteil oder Formrahmen (504) gehalten oder ausgebildet ist, dessen Druckfläche an die Form des Werkstückes oder an die Form der Randbereiche des Werkstückes (21) im Umbugbereich und/oder an die Form der Einlegeform (403) angepasst ist, **dadurch gekennzeichnet,**
**dass** die gegen den Innenraum (110) der Ausnehmung (414) zur Aufnahme der Einlegeform (403) Kraft ausübende Einrichtung durch einen sich zumindest über einen Bereich des Umfanges der Ausnehmung (414) erstreckenden, flexiblen Bauteil, insbesondere einen luftgefüllten oder aufblasbaren Schlauch (413) oder ein Schaumstoffprofil gebildet ist, wobei an dem Oberwerkzeug oder Druckelement (501) eine Quetschplatte (502) federnd gehalten ist, die zumindest eine gegen den Bauteil, insbesondere Schlauch (413) oder Schaumstoffprofil, gerichtete Nase oder Rippe (521) aufweist, die an den von der Ausnehmung (414) abgekehrten Rand des Bauteiles anpressbar ist, sodass dieser in die Ausnehmung (414) eindringt oder in Richtung der Ausnehmung (414) bewegbar ist.

7. Einrichtung gemäß Anspruch 6, **dadurch gekennzeichnet, dass** der Anpress-Formrahmen (504) sich zumindest über Teilbereiche der Einlegeform (403) erstreckt und/oder dass die Einlegeform (403) gegen Federkraft relativ zur Platte (401) oder auf diese zu verschiebbar gelagert ist.

8. Einrichtung gemäß Anspruch 6 oder 7, **dadurch gekennzeichnet, dass** das Oberwerkzeug oder Druckelement (501) und/oder der Anpress-Formrahmen (504) mit zumindest einer Heizeinrichtung (601) versehen oder beheizt sind.

9. Einrichtung gemäß einem der Ansprüche 6 bis 8, **dadurch gekennzeichnet, dass** an dem Oberwerkzeug oder Druckelement (501) zumindest ein Festhalte-Formteil (502) und/oder zumindest ein Festhalte-Stift federnd, insbesondere in Pressrichtung verschiebbar, gehalten sind, die mit der Einlegeform (403) zusammenwirken und zum Niederhalten des Werkstückes (21) dienen, wobei gegebenenfalls dieser Festhalte-Formteil (502) und/oder Festhalte-Stift zumindest teilweise von dem Anpress-Formrahmen (504) umgeben sind und/oder dass zur rechtzeitigen Erfassung des Umbugrandes (12) bei steilen Innenwänden des Werkstückes der Anpress-Formrahmen (504) zumindest abschnittsweise von einem federnd am Druckelement (501) abgestützten Festhalterahmen (507) umgeben ist, der vor Schließen des Druckelementes (510) in seine Haltestellung verstellbar ist.

10. Einrichtung gemäß einem der Ansprüche 6 bis 9, **dadurch gekennzeichnet, dass** die Einlegeform (403) einen mit einer Vakuumquelle verbindbaren Hohlraum (32) abschließt, der vorteilhafter Weise von der Einlegeform (403), einer Grundplatte (31) und einer die Einlegeform (403) umgebenden Platte (401) begrenzt ist und/oder dass zwischen der Einlegeform (403) und der Platte (401) ein Spalt (402) ausgespart ist.

## Claims

1. Method for wrapping or bending flexible materials over a workpiece (21) having a three-dimensional extension, wherein said workpiece (21) is put onto at least one blank (11), which is to be wrapped around this workpiece (21) and whose dimensions exceed those of said workpiece (21), said blank (11) together with said workpiece (21) being introduced or drawn into a recess (414) of a snatch mould (403) whose boundary corresponds substantially to the circumference of said workpiece (21) or exceeds it insignificantly, and wherein the protruding rims (12) of said blank (11) are bent and are pressed or bound to the workpiece by a force, which preferably acts perpendicularly to the surface of said recess (414) and/or of said workpiece (21),
wherein in a first step said workpiece (21) with said blank (11) are sucked in or are drawn into said recess (414) by a subpressure, the rims of said blank (11) being put up perpendicularly to the plane of said snatch mould (403) so as to protrude from them,
while in a second step for bending the protruding rims or marginal regions (12), after sucking into the cavity or recess (414), the upstanding, protruding rims (12) of the blank (11) are inclined or bent by a certain magnitude of angle by a force pointing from the edge of said recess (414) in the direction of that space (110), which is defined by it and which, preferably acts parallel to the snatch mould (403),
and wherein subsequently, in a third step, the rims or the marginal regions (12) of said blank (11) are further bent and pressed against said workpiece (21) by a force, which acts substantially in perpendicular direction to said recess (414) or to said workpiece (21) or to the plane of said snatch mould (403), **characterised in that** the force exerted for bending is produced by partial squeezing, effected at least over a partial region of said recess (414), and deforming a flexible component, particularly a hose (413), filled with air or being inflatable, or by a foam profile, which, by this squeezing, is urged in a region turned away from said recess (414) and from said workpiece (21) towards the internal space (110) of said recess (414) or towards said workpiece (21), and which bends or inclines said blank (11) together with the marginal regions (12) of said blank (11) in the direction towards said workpiece.

2. Method according to claim 1, **characterised in that** the protruding rims (12), in said second step, are brought by the force into a position, in which they form an angle (α) with a perpendicular line to the workpiece (21) or to the direction of pressing or to the plane of said snatch mould (403) of 20° to 90°, preferably of 30° to 70°.

3. Method according to claim 1 or 2, particularly for wrapping or bending said blank (11) in case of an internally concave shaped workpiece, **characterised in that**, after the first step, the blank (11) is held at least in a partial area of the front end marginal surface of said workpiece (21) or along at least a partial area of the periphery of said snatch mould (403), while, simultaneously with holding, the third step of bending and pressing is carried out by a press frame or a mould part, and holding is maintained up to the start of said third step, particularly up to the end thereof.

4. Method according to any of claims 1 to 3, **characterised in that**, in order to bind the bent rims or marginal regions (12) to said workpiece (21), the marginal surface of said workpiece (21) is made to begin to melt through said marginal regions (12), and said workpiece (21 is pressed connected, cemented or welded together with said rim (12) of said blank (11).

5. Method according to any of claims 1 to 4, **characterised in that** leather, artificial leather, plastic or textile material are used as flexible materials, and are bound to workpieces (21) of metal, plastic material, paper or press masses or to areal shaped parts or to parts of an internal vehicle equipment.

6. Apparatus for carrying out the method according to any of claims 1 to 5, comprising a plate (401) having a recess (414), in which a snatch mould (403) is displaceably held, optionally while maintaining a small annular gap (402), and is provided for receiving a blank (11) of an outer material and a workpiece (21), which engages the latter or is bound to it, the contour of which corresponding substantially to that of said snatch mould (403) or being somewhat smaller, wherein the tool includes an upper tool or pressure element (501) opposite said snatch mould (403), and wherein at least one means is arranged, that provides a force acting from the margin to or in the direction of the space (110) defined by said snatch mould (403) or towards the centre of said recess (414), so that the protruding rim or the marginal portion (12) of said blank (11) may be biased by said force, and wherein a press part or mould frame (504) is held or formed at said upper tool or pressure element (501), the press surface of which being adapted to the shape of said workpiece or to the shape of the marginal regions of said workpiece (21) in the bending region and/or to the shape of said snatch mould (403), **characterised in**
**that** the means for exerting a force towards the internal space (110) of said recess (414) for receiving said snatch mould (403) is formed by a flexible component, particularly an air filled or inflatable hose (413) or a foam profile, which extends at least over a portion of the circumference of said recess (414), wherein a squeezing plate (502) is elastically held by the upper tool or pressure element (501) and includes at least one nose or rib (521) directed against the component, particularly the hose (413) or the foam profile, which may be pressed against that margin of the component which is turned away from said recess (414), so that it enters the recess (414) or may be moved in the direction of said recess (414).

7. Apparatus according to claim 6, **characterised in that** said mould press frame (504) extends at least over partial regions of said snatch mould (403) and/or that said snatch mould (403) is displaceably supported relative to the plate (401), or towards it, against the force of a spring.

8. Apparatus according to claim 6 or 7, **characterised in that** said upper tool or pressure element (501) and/or said mould press frame (504) are provided with at least one heating means (601) or are heated.

9. Apparatus according to any of claims 6 to 8, **characterised in that** at least one holding mould part (502) and/or at least one fixing pin are elastically held, and in particular are displaceable in pressing direction, on said upper tool or pressure element (501), and cooperate with said snatch mould (403) serving for holding down said workpiece (21),
wherein optionally this holding mould part (502) and/or fixing pin are surrounded by said mould press frame (504), at least in part, and/or that for seizing the bending rim (12) in time, in case the inner walls of the workpiece are steep, said mould press frame (504) is surrounded, at least in part, by a holding frame (507) elastically supported by said pressure element (501) and displaceable into its holding position prior to closing said pressure element (501).

10. Apparatus according to any of claims 6 to 9, **characterised in that** said snatch mould (403) closes a cavity (32), which is connectable to a source of vacuum, and which is advantageously defined by said snatch mould (403), by a base plate (31) and by a plate (401) which surrounds the snatch mould (403), and/or that a gap (402) is formed between said snatch mould (403) and said plate (401).

## Revendications

1. Procédé pour envelopper ou replier des matériaux flexibles sur une pièce d'oeuvre (21) d'une étendue à trois dimensions, dans lequel la pièce d'oeuvre (21) est posée sur au moins une pièce découpée (11), prévue à envelopper cette pièce d'oeuvre (21), dont la grandeur dépasse celle de la pièce d'oeuvre (21), et la pièce découpée (11) conjointement avec la pièce d'oeuvre (21) est introduite ou tirée dans un creusement (414) d'un moule d'insertion (403), dont la délimitation correspond sensiblement au contour de la pièce d'oeuvre (21) ou le dépasse légèrement, et dans lequel les bords en saillie (12) de la pièce découpée (11) sont repliés et, avec une force, qui préférablement agit perpendiculairement à la surface du creusement (414) et/ou de la pièce d'oeuvre (21), sont pressés à celle-ci ou sont reliés à celle-ci,
dans lequel, dans une première étape, la pièce d'oeuvre (21) avec la pièce découpée (11) est aspirée ou retirée dans le creusement (414) par un vide, les bords de la pièce découpée (11) étant mis debout perpendiculairement au plan du moule d'insertion (403) en dépassant les bords de ceci,
dans lequel, dans une deuxième étape pour replier les bords ou zones marginaux (12) en saillie après l'aspiration dans le creusement ou le creux (414), les bords (12) mis debout et en saillie de la pièce découpée (11) sont inclinés ou repliés par une grandeur d'angle par une force dirigée à partir du bord du creusement (414) en direction de l'espace (110) délimité par ceci, qui de préférence agit parallèlement au moule d'insertion (403),
et dans lequel subséquemment, dans une troisième étape, les bords des zones marginaux (12) de la pièce découpée (11), avec une force agissant sensiblement perpendiculairement au creusement (414) ou à la pièce d'oeuvre (21) ou au plan du moule d'insertion (403) sont ultérieurement repliés et pressés contre la pièce d'oeuvre (21), **caractérisé en ce, que** la force, exercée pour replier, est produite par un écrasement partiel et une déformation, qui est effectué au moins dans une zone partielle du creusement (414), d'un composant flexible, particulièrement d'un tuyau flexible (413) rempli d'air ou gonflable, ou d'un profilé alvéolaire, qui est poussé vers l'espace intérieur (110) du creusement (414) ou vers la pièce d'oeuvre (21) par cet écrasement dans une zone détournée du creusement (414) et de la pièce d'oeuvre (21), en repliant ou inclinant ainsi la pièce découpée (11) conjointement avec la zone marginal (12) de la pièce découpée (11) en direction vers la pièce d'oeuvre.

2. Procédé selon la revendication 1, **caractérisé en ce, que** les bords en saillie (12), dans la deuxième étape, sont mus par la force dans une position, dans laquelle ils font un angle (α) avec une perpendiculaire à la pièce d'oeuvre (21) ou à la direction de pressage ou au plan du moule d'insertion (403) de 20° à 90°, de préférence de 30° à 70°.

3. Procédé selon la revendication 1 ou 2, particulièrement pour envelopper ou replier la pièce découpée (11) en cas des pièces d'oeuvre d'une forme concave à l'intérieur, **caractérisé en ce, que** la pièce découpée (11), après la première étape, est tenue au moins à une zone partielle de la surface marginale au côté frontal de la pièce d'oeuvre (21) ou le long au moins une zone partielle de la circonférence du moule d'insertion (403), et que, tout en la tenant, on effectue simultanément la troisième étape en repliant et pressant par un cadre de pressage ou un part de moule, et on la tient jusqu'au commencement, en particulier jusqu'à la fin, de la troisième étape.

4. Procédé selon une quelconque des revendications 1 à 3, **caractérisé en ce, que** pour relier les bords ou zones marginaux (12) repliés avec la pièce d'oeuvre (21), on fait commencer à fondre la surface marginale de la pièce d'oeuvre (21) à travers les zones marginaux (12), et on presse, colle ou soude la pièce d'oeuvre (21) au bord (12) de la pièce découpée (11).

5. Procédé selon une quelconque des revendications 1 à 4, **caractérisé en ce, que** l'on utilise du cuir, du cuir artificiel, de la matière plastique ou textile comme des matériaux flexibles, qui sont reliés aux pièces d'oeuvre (21), qui consistent du métal, de la matière plastique, du papier, des matières moulées, ou aux pièces façonnées à deux dimensions ou aux parties d'équipement interne de véhicule.

6. Dispositif pour l'exécution du procédé selon une quelconque des revendications 1 à 5, comprenant une plaque (401) ayant un creusement (414), dans lequel un moule d'insertion (403) est tenu d'une façon déplaçable, le cas échéant tout en prévoyant une petite fente annulaire (402), qui est prévu pour recevoir une pièce découpée (11) d'un matériau extérieur et une pièce d'oeuvre (21) supportée par celle-ci ou reliée à celle-ci, dont la contour correspond sensiblement à celle du moule d'insertion (403) ou est un peu plus petite, dans lequel l'outil comprend un outil supérieur ou un élément de pressage (501) opposé au moule d'insertion (403), au moins un moyen étant disposé dans la zone de ou à la plaque (401) de la pièce d'oeuvre ou dans la zone des parois (416) du creusement (414), qui sont tournées vers l'espace interne (110) du creusement (414) pour la réception du moule d'insertion (403) pour établir une force, qui agit à partir du bord vers l'espace ou en direction de l'espace (110) défini par le moule d'insertion (403) ou vers le centre du creusement (414), avec laquelle on peut charger le bord ou la zone marginal (12) en saillie de la pièce découpée (11), et dans lequel une partie de pression ou un cadre de moule (504) est tenu ou formé à l'outil supérieur ou à l'élément de pressage (501), dont la surface de pression est adaptée à la forme de la pièce d'oeuvre (21) ou à la forme des zones marginaux de la pièce d'oeuvre, dans la zone de pliage et/ou à la forme du moule d'insertion (403), **caractérisé en ce,**
**que** le moyen, qui exerce une force vers l'espace intérieur (110) du creusement (414) pour la réception du moule d'insertion (403), est formé par un composant flexible, qui s'étend sur au moins une zone de la circonférence du creusement (414), en particulier un tuyau flexible (413) rempli d'air ou gonflable, ou un profilé alvéolaire, une plaque d'écrasement (502) étant maintenue élastiquement à l'outil supérieur ou l'élément de pressage (501) et présente un talon ou une nervure (521), qui est tourné contre le composant, particulièrement contre le tuyau flexible (413) ou contre le profilé alvéolaire, et qui peut être pressé au bord du composant détourné du creusement (414), de manière qu'il entre dans le creusement (414) ou peut être mû en direction vers le creusement (414).

7. Dispositif selon la revendication 6, **caractérisé en ce, que** le cadre presseur de moule (504) s'étend au moins sur des zones partielles du moule d'insertion (403) et/ou que le moule d'insertion (403) est supporté d'une façon déplaçable relativement à la plaque (401) contre la force d'un ressort ou vers celle-ci.

8. Dispositif selon la revendication 6 ou 7, **caractérisé en ce, que** l'outil supérieur ou l'élément de pressage (501) et/ou le cadre presseur de moule (504) sont pourvus d'au moins un dispositif de chauffage (601) ou sont chauffés.

9. Dispositif selon une quelconque des revendications 6 à 8, **caractérisé en ce, qu**'au moins une partie fixante de moule (502) et/ou au moins une cheville de fixation sont tenues d'une façon élastique, et en particulier déplaçable en direction de pressage, à l'outil supérieur ou à l'élément de pressage (501), et coopèrent avec le moule d'insertion (403) et servent comme serre-flan pour la pièce d'oeuvre (21), cette partie fixante de moule (502) et/ou la cheville de fixation étant, le cas échéant, au moins partiellement entourées par le cadre presseur de moule (504), et/ou que le cadre presseur de moule (504), pour saisir à temps le bord à plier (12), en cas des parois intérieures escarpées de la pièce d'oeuvre, est entouré au moins à une section par un cadre de maintien (507), qui est appuyé élastiquement à l'élément de pressage (501) et qui peut être déplacé à sa position de maintien avant que l'élément de pressage (501) soit fermé.

10. Dispositif selon une quelconque des revendications 6 à 9, **caractérisé en ce, que** le moule d'insertion (403) ferme une cavité (32) connectable à une source de vacuum et délimité avantageusement par le moule d'insertion (403), par une plaque de base (31) et par une plaque (401) entourant le moule d'insertion (403), et/ou qu'une fente (402) est formée entre le moule d'insertion (403) et la plaque (401).
